(19) **Europäisches Patentamt**
**European Patent Office**
**Office européen des brevets**

(11)   **EP 4 692 921 A2**

(12)   **EUROPEAN PATENT APPLICATION**

(43) Date of publication:
**11.02.2026   Bulletin 2026/07**

(51) International Patent Classification (IPC):
**G02F 1/35** *(2006.01)*        **G02F 1/365** *(2006.01)*

(21) Application number: **25221876.3**

(22) Date of filing: **09.12.2025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(71) Applicant: **ASML Netherlands B.V.
5500 AH Veldhoven (NL)**

(72) Inventors:
- **CAMPI, Filippo
  5500 AH Veldhoven (NL)**
- **ABDOLVAND, Amir
  5500 AH Veldhoven (NL)**
- **SAJADI HEZAVEH, Mohsen
  5500 AH Veldhoven (NL)**
- **TAO, Yin
  5500 AH Veldhoven (NL)**

(74) Representative: **ASML Netherlands B.V.
Corporate Intellectual Property
P.O. Box 324
5500 AH Veldhoven (NL)**

(54) **SYSTEMS, METHODS, AND COMPUTERS SOFTWARE FOR AMPLIFICATION AND CONTROL OF LIGHT FOR USE IN LITHOGRAPHIC APPARATUSES**

(57)   Disclosed is a wavelength-controllable light source that includes one or more light sources configured to provide light pulses. There is a first optical path for a high energy pulse from the one or more light sources and a second optical path for a low energy pulse from the one or more light sources. There is a supercontinuum generator on the second optical path, the supercontinuum generator configured to spectrally broaden the low energy pulse into a supercontinuum. A tunable filter on the second optical path is configured to generate a seed pulse by passing the supercontinuum that is within an amplification band. A nonlinear amplifier is configured to receive the seed pulse and the high energy pulse and generate an amplified light pulse by amplifying the seed pulse with a portion of the high energy pulse.

Fig. 6

**Description**

TECHNICAL FIELD

The present disclosure relates to amplification and control of light for lithographic applications. In particular, amplification and control of light to provide amplification or delivery of specified wavelengths.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k1 lithography may be used to process features with dimensions smaller than the classical resolution limit of a lithographic apparatus. In such process, the resolution formula may be expressed as $CD = k1 \times \lambda / NA$, where $\lambda$ is the wavelength of radiation employed, NA is the numerical aperture of the projection optics in the lithographic apparatus, CD is the "critical dimension" (generally the smallest feature size printed, but in this case half-pitch) and k1 is an empirical resolution factor. In general, the smaller k1 the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling the stability of the lithographic apparatus may be used to improve reproduction of the pattern at low $k_1$.

SUMMARY

In some aspects, the techniques described herein relate to a wavelength-controllable light source including: one or more light sources configured to provide light pulses; a first optical path for a high energy pulse from the one or more light sources; a second optical path for a low energy pulse from the one or more light sources; a supercontinuum generator on the second optical path, the supercontinuum generator configured to spectrally broaden the low energy pulse into a supercontinuum; a tunable filter on the second optical path, the tunable filter configured to generate a seed pulse by passing the supercontinuum that is within an amplification band; and a nonlinear amplifier configured to receive the seed pulse and the high energy pulse and generate an amplified light pulse by amplifying the seed pulse with a portion of the high energy pulse.

In some aspects, the techniques described herein relate to a wavelength-controllable light source, the one or more light sources including a laser, and the wavelength-controllable light source further including a splitter configured to split the light pulses into the high energy pulse and the low energy pulse.

In some aspects, the techniques described herein relate to a wavelength-controllable light source, the splitter including one or more of an intensity-based splitter, a polarization splitter, a wavefront splitter, or a diffractive splitter.

In some aspects, the techniques described herein relate to a wavelength-controllable light source, the one or more light sources including: a first light source configured to generate the high energy pulse; and a second light source configured to generate the low energy pulse.

In some aspects, the techniques described herein relate to a wavelength-controllable light source, wherein the one or more light sources are configured to generate the light pulses to have a duration between 10 fs and 100 nanoseconds.

In some aspects, the techniques described herein relate to a wavelength-controllable light source, wherein the one or more light sources are configured to generate the light pulses to have a duration between 1 and 1000 picoseconds.

In some aspects, the techniques described herein relate to a wavelength-controllable light source, wherein an energy ratio of the high energy pulse to the low energy pulse is at least 4.

In some aspects, the techniques described herein relate to a wavelength-controllable light source, wherein an energy ratio of the high energy pulse to the low energy pulse is at least 99.

In some aspects, the techniques described herein relate to a wavelength-controllable light source, the supercontinuum generator including a photonic crystal fiber that receives the low energy pulse and spectrally broaden wavelengths of the low energy pulse into the supercontinuum.

In some aspects, the techniques described herein relate to a wavelength-controllable light source, wherein the photonic crystal fiber is a solid-core photonic crystal fiber.

In some aspects, the techniques described herein relate to a wavelength-controllable light source, the solid-core photonic crystal fiber including a rare earth dopant in a core of the solid-core photonic crystal fiber.

In some aspects, the techniques described herein relate to a wavelength-controllable light source, wherein the photonic crystal fiber is a hollow-core photonic crystal fiber including a fluid working medium.

In some aspects, the techniques described herein relate to a wavelength-controllable light source, the fluid working medium including a molecular gas or a noble gas.

In some aspects, the techniques described herein relate to a wavelength-controllable light source, wherein the low energy pulse spectrally broadened into the supercontinuum includes light with a wavelength in a range of 100 nm to 10000 nm.

In some aspects, the techniques described herein relate to a wavelength-controllable light source, wherein the light is in the range of 300 nm to 2000 nm.

In some aspects, the techniques described herein relate to a wavelength-controllable light source, the tunable filter including an acusto-optical tunable filter.

In some aspects, the techniques described herein relate to a wavelength-controllable light source, the tunable filter including filtering locations having different filtering characteristics, the tunable filter configured to be movable to different positions to place the supercontinuum onto the different filtering locations.

In some aspects, the techniques described herein relate to a wavelength-controllable light source, the tunable filter including filtering locations having different filtering characteristics, the second optical path including a light-directing element that is adjustable to direct the supercontinuum onto the different filtering locations.

In some aspects, the techniques described herein relate to a wavelength-controllable light source, the tunable filter including a grating light valve.

In some aspects, the techniques described herein relate to a wavelength-controllable light source, the tunable filter including a plurality of filters and a digital micromirror device configured to adjustably direct the supercontinuum to a selected filter.

In some aspects, the techniques described herein relate to a wavelength-controllable light source, wherein the amplification band has a bandwidth of 0.1nm to 50 nm about a central wavelength.

In some aspects, the techniques described herein relate to a wavelength-controllable light source, the nonlinear amplifier including a gas-filled hollow core photonic crystal fiber.

In some aspects, the techniques described herein relate to a wavelength-controllable light source, the nonlinear amplifier configured to produce the amplified light pulse to have an optical density of at least 3.0, the optical density representing a ratio of power of the amplified light pulse within the amplification band to power outside the amplification band.

In some aspects, the techniques described herein relate to a wavelength-controllable light source, the nonlinear amplifier configured to generate the amplified light pulse utilizing three-wave mixing.

In some aspects, the techniques described herein relate to a wavelength-controllable light source, wherein the nonlinear amplifier includes a non-linear crystal that acts as a gain medium.

In some aspects, the techniques described herein relate to a wavelength-controllable light source, the nonlinear amplifier configured to generate the amplified light pulse utilizing four-wave mixing.

In some aspects, the techniques described herein relate to a wavelength-controllable light source, wherein the nonlinear amplifier is a gas-filled hollow-core photonic crystal fiber.

In some aspects, the techniques described herein relate to a wavelength-controllable light source, wherein the laser is an oscillator and the nonlinear amplifier includes a gas-filled hollow core photonic crystal fiber.

In some aspects, the techniques described herein relate to a wavelength-controllable light source, wherein the high energy pulse has an energy between 200 nJ and 400 nJ.

In some aspects, the techniques described herein relate to a wavelength-controllable light source, wherein the high energy pulse has a duration between 100 fs and 200 fs.

In some aspects, the techniques described herein relate to a wavelength-controllable light source, wherein the laser has a pulse repetition rate between 5 and 60 MHz.

In some aspects, the techniques described herein relate to a wavelength-controllable light source, wherein the low energy pulse has an energy between 10 pJ and 200 pJ.

In some aspects, the techniques described herein relate to a wavelength-controllable light source, wherein the low energy pulse has a duration between 100 fs and 200 fs.

In some aspects, the techniques described herein relate to a wavelength-controllable light source, wherein a gas inside the gas-filled hollow core photonic crystal fiber includes one of nitrous-oxide at between 5 and 10 bar, krypton at between 2 and 10 bar, or xenon at between 1 and 4 bar.

In some aspects, the techniques described herein relate to a wavelength separation system including: an input for receiving light including at least three separated wavelength bands; an output for outputting light of one wavelength band of the at least three separated wavelength bands; and a plurality of combinations to receive light from one or more of the at least three separated wavelength bands, the plurality of combinations including: one or more Pockels cells; and a polarizing beam splitter; wherein, for the respective combinations, the one or more Pockels cells are configured to control polarization of received light, wherein, for the respective combinations, the polarizing beam splitter receives light from the one or more Pockels cells and is arranged to let through light of a first polarization and to redirect light of a second polarization, wherein, the plurality of combinations are arranged to send the light of one wavelength band to the output.

In some aspects, the techniques described herein relate to a wavelength separation system, wherein, for the at least three wavelength bands, a first wavelength band corresponds to an pump component of light output from a nonlinear amplifier, a second wavelength band corresponds to a signal component of light output from the nonlinear amplifier, and a third wavelength band corresponds to an idler component of light output from the nonlinear amplifier.

In some aspects, the techniques described herein relate to a wavelength separation system, further including a first dichroic mirror configured to separate the signal component and direct the signal component to a first Pockels cell of the one or more Pockels cells.

In some aspects, the techniques described herein relate to a wavelength separation system, further including a second dichroic mirror configured to separate the idler component and direct the idler component to a second Pockels cell of the one or more of Pockels cells.

In some aspects, the techniques described herein relate to a wavelength separation system, wherein a third Pockels cell of the one or more Pockels cells is configured to receive the pump component and the signal component, wherein the pump component and the signal component have different polarizations due to the signal component passing through a first Pockels cell.

In some aspects, the techniques described herein relate to a wavelength separation system, including: at least two dichroic mirrors to split the at least three wavelength bands into three separate optical paths; and at least three polarizing beam splitters configured to allow a wavelength band through based on whether a corresponding Pockels cell of the one or more Pockels cells is energized to change the polarization of the corresponding wavelength band.

In some aspects, the techniques described herein relate to a system including: an adjustable color filter configured to receive multi-wavelength light and to selectively pass seed light in an amplification band; a diffractive element configured to disperse the seed light from the adjustable color filter into different optical paths based on the amplification band; a mirror configured to direct the seed light from the diffractive element and to focus the seed light to a focal point; and a nonlinear amplifier configured to receive pump light and configured to receive the seed light at the focal point from different angles based on the different optical paths, wherein the different optical paths result in phase matching with the pump light in the nonlinear amplifier causing amplification of the seed light.

In some aspects, the techniques described herein relate to a system, wherein the seed light is a laser pulse.

In some aspects, the techniques described herein relate to a system, wherein the seed light is a continuous wave laser beam.

In some aspects, the techniques described herein relate to a system, the adjustable color filter including an acusto-optical tunable filter.

In some aspects, the techniques described herein relate to a system, the adjustable color filter including filtering locations having different filtering characteristics, the adjustable color filter configured to be movable to different positions to place the seed light onto the different filtering locations.

In some aspects, the techniques described herein relate to a system, the adjustable color filter including filtering locations having different filtering characteristics, the system including a light-directing element that is adjustable to direct the seed light onto the different filtering locations.

In some aspects, the techniques described herein relate to a system, the adjustable color filter including a grating light valve.

In some aspects, the techniques described herein relate to a system, the adjustable color filter including a plurality of filters and a digital micromirror device configured to adjustably direct the seed light to a selected filter.

In some aspects, the techniques described herein relate to a system, wherein the diffractive element is a prism.

In some aspects, the techniques described herein relate to a system, wherein the diffractive element is a diffraction grating.

In some aspects, the techniques described herein relate to a system, further including a set of diffractive elements arranged to receive the amplified seed light that is angularly dispersed from the different optical paths, the arrangement of the set of diffractive elements causing the amplified seed light to be collimated.

In some aspects, the techniques described herein relate to a system, wherein the nonlinear amplifier includes a non-linear crystal that acts as a gain medium.

In some aspects, the techniques described herein relate to a wavelength-controllable light source including: a light deflector configured to selectively direct a pump beam into one of a plurality of pump optical paths; a dispersive element configured to disperse a seed beam into a plurality of seed optical paths; a dichroic mirror where a selected pump optical path passes through to intersect and become collinear with one of the seed optical paths that are reflected off the dichroic mirror;

and a nonlinear amplifier configured to generate an amplified seed beam using the pump beam, wherein amplification of the seed beam is based on a location where the selected pump optical path reaches the nonlinear amplifier.

In some aspects, the techniques described herein relate to a wavelength-controllable light source, wherein the light deflector has a response time of less than 10 microseconds.

In some aspects, the techniques described herein relate to a wavelength-controllable light source, wherein the light deflector is an acousto-optic light deflector.

In some aspects, the techniques described herein relate to a wavelength-controllable light source, wherein the light deflector is a steering mirror.

In some aspects, the techniques described herein relate to a wavelength-controllable light source, wherein the dispersive element is a reflective diffraction grating.

In some aspects, the techniques described herein relate to a wavelength-controllable light source, wherein the dispersive element is a prism.

In some aspects, the techniques described herein relate to a wavelength-controllable light source, wherein the nonlinear amplifier is a fanout crystal.

In some aspects, the techniques described herein relate to a wavelength-controllable light source, wherein the fanout crystal has a varying pitch size at different spatial positions along the pump optical paths and provides phase matching of the pump beam and a corresponding wavelength of the seed beam.

In some aspects, the techniques described herein relate to a wavelength-controllable light source, wherein pitch size range is between 6 and 12 micrometers.

In some aspects, the techniques described herein relate to a wavelength-controllable light source, wherein the pump beam and the seed beam are frequency doubled to reduce a wavelength of the amplified seed beam.

In some aspects, the techniques described herein relate to a wavelength-controllable light source, further including a symmetric mirror and a symmetric dispersive element that mirror the dichroic mirror and the dispersive element to cause the amplified seed beam for different selected pump optical paths to be on a same output optical path.

In some aspects, the techniques described herein relate to a semiconductor device manufacturing method including: receiving a substrate with a photoresist layer; directing light from a wavelength-controllable light source to transfer a pattern from a mask onto the photoresist layer, the wavelength-controllable light source including: one or more light sources configured to provide light pulses; a first optical path for a high energy pulse from the one or more light sources; a second optical path for a low energy pulse from the one or more light sources; a supercontinuum generator on the second optical path, the supercontinuum generator configured to spectrally broaden the low energy pulse into a supercontinuum; a tunable filter on the second optical path, the tunable filter configured to generate a seed pulse by passing the supercontinuum that is within an amplification band; and a nonlinear amplifier configured to receive the seed pulse and the high energy pulse and generate an amplified light pulse by amplifying the seed pulse with a portion of the high energy pulse; and removing a portion of the photoresist layer to form the pattern over the substrate.

In some aspects, the techniques described herein relate to a computer program product including a non-transitory, machine-readable medium storing instructions which, when executed by at least one programmable processor, cause operations including: controlling a lithography system to direct radiation from a wavelength-controllable light source to transfer a pattern from a mask onto a substrate with a photoresist layer, the wavelength-controllable light source including: one or more light sources configured to provide light pulses; a first optical path for a high energy pulse from the one or more light sources; a second optical path for a low energy pulse from the one or more light sources; a supercontinuum generator on the second optical path, the supercontinuum generator configured to spectrally broaden the low energy pulse into a supercontinuum; a tunable filter on the second optical path, the tunable filter configured to generate a seed pulse by passing the supercontinuum that is within an amplification band; and a nonlinear amplifier configured to receive the seed pulse and the high energy pulse and generate an amplified light pulse by amplifying the seed pulse with a portion of the high energy pulse; and controlling the lithography system to remove a portion of the photoresist layer to form the pattern over the substrate.

In some aspects, the techniques described herein relate to a semiconductor device manufacturing method including: receiving a substrate with a photoresist layer; directing light from a light source to transfer a pattern from a mask onto the photoresist layer by at least directing the light through a wavelength separation system including: an input for receiving light including at least three separated wavelength bands; an output for outputting light of one wavelength band of the at least three separated wavelength bands; and a plurality of combinations to receive light from one or more of the at least three separated wavelength bands, the plurality of combinations including: one or more Pockels cells; and a polarizing beam splitter; wherein, for the respective combinations, the one or more Pockels cells are configured to control polarization of received light, wherein, for the respective combinations, the polarizing beam splitter receives light from the one or more Pockels cells and is arranged to let through light of a first polarization and to redirect light of a second polarization, wherein, the plurality of combinations are arranged to send the light of one wavelength band to the output; and removing a portion of the photoresist layer to form the pattern over the substrate .

In some aspects, the techniques described herein relate to a computer program product including a non-transitory, machine-readable medium storing instructions which, when executed by at least one programmable processor, cause operations including: controlling a lithography system to direct light from a light source to transfer a pattern from a mask onto a substrate with a photoresist layer, the light source including a wavelength separation system including: an input for receiving light including at least three separated wavelength bands; an output for outputting light of one wavelength band of the at least three separated wavelength bands; and a plurality of combinations to receive light from one or more of the at least three separated wavelength bands, the plurality of combinations including: one or more Pockels cells; and a polarizing beam splitter; wherein, for the respective combinations, the one or more Pockels cells are configured to control polarization of received light, wherein, for the respective combinations, the polarizing beam splitter receives light from the one or more Pockels cells and is arranged to let through light of a first polarization and to redirect light of a second polarization, wherein, the plurality of combinations are arranged to send the light of one wavelength band to the output; and controlling the lithography system to remove a portion of the photoresist layer to form the pattern over the substrate.

In some aspects, the techniques described herein relate to a semiconductor device manufacturing method including: receiving a substrate with a photoresist layer; directing light from a light source to transfer a pattern from a mask onto the photoresist layer, the light directed through a system including: an adjustable color filter configured to receive multi-wavelength light and to selectively pass seed light in an amplification band; a diffractive element configured to disperse the seed light from the adjustable color filter into different optical paths based on the amplification band; a mirror configured to direct the seed light from the diffractive element and to focus the seed light to a focal point; and a nonlinear amplifier configured to receive pump light and configured to receive the seed light at the focal point from different angles based on the different optical paths, wherein the different optical paths result in phase matching with the pump light in the nonlinear amplifier causing amplification of the seed light; and removing a portion of the photoresist layer to form the pattern over the substrate.

In some aspects, the techniques described herein relate to a computer program product including a non-transitory, machine-readable medium storing instructions which, when executed by at least one programmable processor, cause operations including: controlling a lithography system to direct light from a light source to transfer a pattern from a mask onto a substrate with a photoresist layer, the light directed through a system including: an adjustable color filter configured to receive multi-wavelength light and to selectively pass seed light in an amplification band; a diffractive element configured to disperse the seed light from the adjustable color filter into different optical paths based on the amplification band; a mirror configured to direct the seed light from the diffractive element and to focus the seed light to a focal point; and a nonlinear amplifier configured to receive pump light and configured to receive the seed light at the focal point from different angles based on the different optical paths, wherein the different optical paths result in phase matching with the pump light in the nonlinear amplifier causing amplification of the seed light; and removing a portion of the photoresist layer to form the pattern over the substrate.

In some aspects, the techniques described herein relate to a semiconductor device manufacturing method including: receiving a substrate with a photoresist layer; directing light from a wavelength-controllable light source to transfer a pattern from a mask onto the photoresist layer, the wavelength-controllable light source including: a light deflector configured to selectively direct a pump beam into one of a plurality of pump optical paths; a dispersive element configured to disperse a seed beam into a plurality of seed optical paths; a dichroic mirror where a selected pump optical path passes through to intersect and become collinear with one of the seed optical paths that are reflected off the dichroic mirror; and a nonlinear amplifier configured to generate an amplified seed beam using the pump beam, wherein amplification of the seed beam is based on a location where the selected pump optical path reaches the nonlinear amplifier; and removing a portion of the photoresist layer to form the pattern over the substrate.

In some aspects, the techniques described herein relate to a computer program product including a non-transitory, machine-readable medium storing instructions which, when executed by at least one programmable processor, cause operations including: controlling a lithography system to direct radiation from a wavelength-controllable light source to transfer a pattern from a mask onto a substrate with a photoresist layer, the wavelength-controllable light source including: a light deflector configured to selectively direct a pump beam into one of a plurality of pump optical paths; a dispersive element configured to disperse a seed beam into a plurality of seed optical paths; a dichroic mirror where a selected pump optical path passes through to intersect and become collinear with one of the seed optical paths that are reflected off the dichroic mirror; and a nonlinear amplifier configured to generate an amplified seed beam using the pump beam, wherein amplification of the seed beam is based on a location where the selected pump optical path reaches the nonlinear amplifier; and controlling the lithography system to remove a portion of the photoresist layer to form the pattern over the substrate.

In some aspects, the techniques described herein relate to a metrology apparatus, an inspection system, or a lithographic system in accordance with any of the above aspects.

BRIEF DESCRIPTION OF THE DRAWINGS

Embodiments of the invention will now be described, by way of example only, with reference to the accompanying schematic drawings, in which:

Figure 1 depicts a schematic overview of a lithographic apparatus;
Figure 2 depicts a schematic overview of a lithographic cell;
Figure 3 depicts a schematic representation of holistic lithography, representing a cooperation between three key technologies to optimize semiconductor manufacturing;
Figure 4 depicts a metrology apparatus and profile reconstruction method;
Figure 5A is a schematic cross sectional view of a hollow core optical fiber that may form part of a radiation source according to an embodiment in a transverse plane (i.e. perpendicular to an axis of the optical fiber);
Figure 5B depicts a schematic representation of a radiation source according to an embodiment for providing broadband output radiation;
Figures 5C (a) and 5C (b) schematically depict the transverse cross-sections of examples of hollow core photonic crystal fiber (HC-PCF) designs for supercontinuum generation;
Figure 6 illustrates a wavelength-controllable light source;
Figure 7 illustrates a first embodiment of a wavelength separation system;
Figure 8 illustrates a second embodiment of a wavelength separation system;
Figure 9 illustrates a broadband amplifier with fast wavelength switching;
Figure 10 illustrates a wavelength-controllable light source utilizing fast deflection of a pump beam; and
Figure 11 schematically depicts an example computer system in which embodiments can be implemented.

## **DETAILED DESCRIPTION**

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

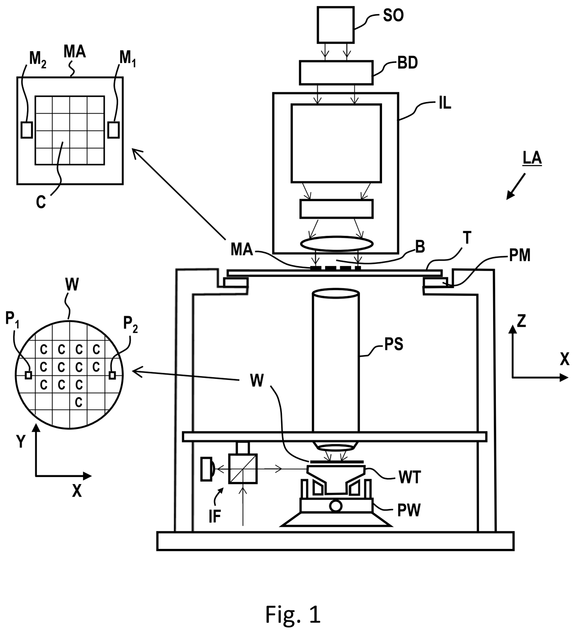

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

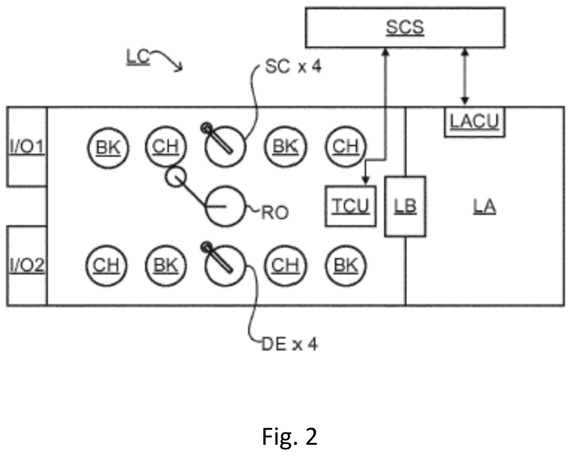

Figure 2 depicts a schematic overview of a lithographic cell. As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

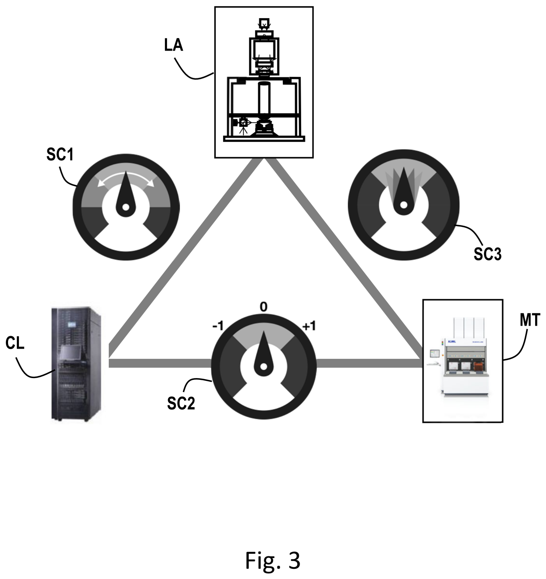

Figure 3 depicts a schematic representation of holistic lithography, representing a cooperation between three key technologies to optimize semiconductor manufacturing. Typically, the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequent measurements of the structures created, e.g., for process control and verification. Tools to make such measurements are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US 2016-0161863 and published US patent application US 2016/0370717 Al incorporated herein by reference in its entirety.

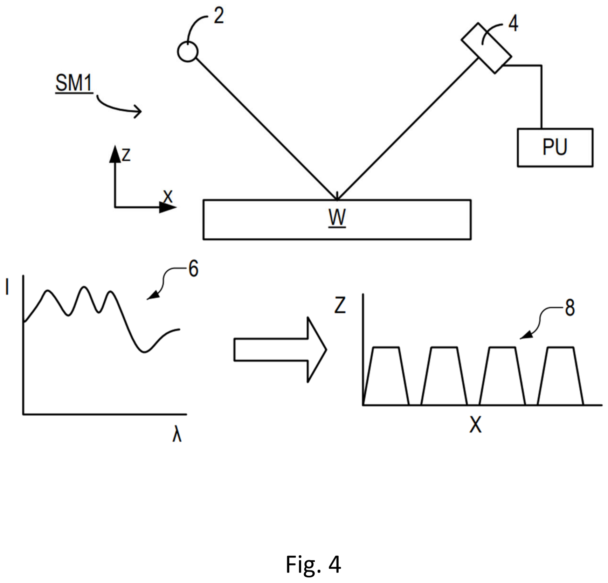

Figure 4 depicts a metrology apparatus and profile reconstruction method. In some embodiments, metrology can be performed with a scatterometer SM1 that can include a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, structure 8 or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of structure 8 can be known and some parameters are assumed from knowledge of the process by which structure 8 was made, leaving only a few parameters of the structure to be determined from the scatterometry data. Such a scatterometer may be configured as a normal-incidence scatterometer or an oblique-incidence scatterometer.

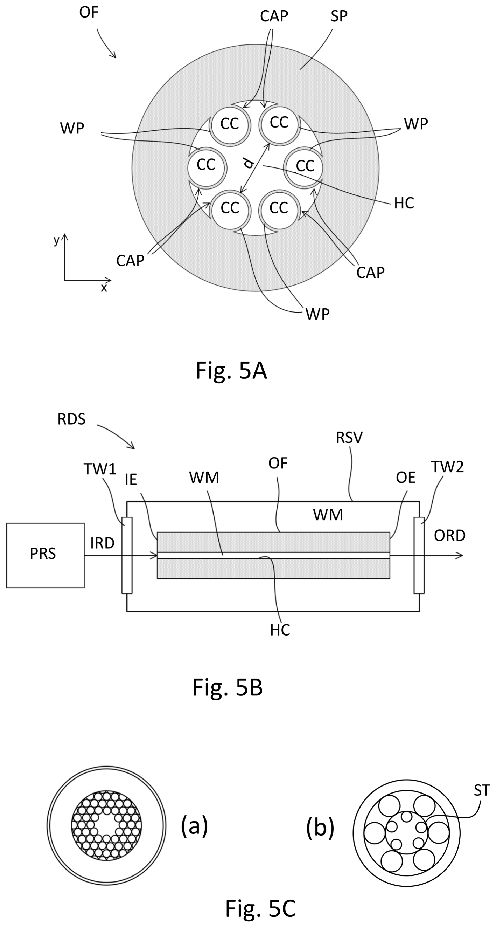

Figures 5A-C illustrate examples of devices for generating supercontinuum radiation. The present disclosure provides numerous embodiments that may utilize, directly or indirectly, nonlinear amplification which may itself include the creation of broadband radiation (or also referred to herein as a supercontinuum). The following provides an overview of supercontinuum generation, aspects of which can be included in any of the disclosed embodiments.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore, different frequencies may be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to spectrally broaden high-power narrow band or single frequency input radiation, for example making use of non-linear, higher order effects. In the present disclosure, the input radiation (which may be produced using a laser) may be referred to as seed radiation, as this is what may be later amplified (optionally by a similar non-linear process). To obtain high power radiation for spectral broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber. (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

In some implementations, as discussed further below with reference to Figure 5B, methods and apparatus for spectrally broadening input radiation may use a fiber for confining input radiation, and for spectrally broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for spectrally broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which also may be referred to herein as white light.

Some embodiments relate to design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/0015085A1 (for HC-PBFs) and International PCT patent application WO02017/032454A1 (for Hollow Core anti-resonant reflecting fibers), which are incorporated herein by reference. Figure 5C(a) shows a Kagome fiber, comprising a Kagome lattice structure.

An example of an optical fiber for use in the radiation source is now described with reference to Figure 5A, which is a schematic cross sectional view of the optical fiber OF in a transverse plane. Further embodiments similar to the practical example of the fiber of Figure 5A are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 5A shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 $\mu$m.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface of the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 $\mu$m. The diameter d of the hollow core HC may affect the mode field diameter, impact loss, dispersion, modal plurality, and non-linearity properties of the hollow core optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Furthermore, although the embodiment shown in Figure 5A comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 5B depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 5A) with a hollow core HC; and a working medium WM (for example a gas) disposed within the hollow core HC. Although in Figure 5B the radiation source RDS comprises the optical fiber OF shown in Figure 5A, in alternative embodiments other types of hollow core optical fiber may be used.

The pulsed pump radiation source PRS is configured to provide input radiation IRD. The hollow core HC of the optical fiber OF is arranged to receive the input radiation IRD from the pulsed pump radiation source PRS, and spectrally broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the radiation source RDS.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 5B above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulation instability (MI), soliton self-compression, soliton fission, Kerr effect, Raman effect and dispersive wave generation, details of which are described in WO2018/127266A1 and US9160137B1 (both of which are hereby incorporated by reference). Since the dispersion of the filling gas can be tuned by varying the working medium WM pressure in the reservoir RSV (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening, high intensity radiation may be desirable. An advantage of having a hollow core optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 $\mu$m. The input radiation IRD may for example comprise electromagnetic radiation with a wavelength of 1.03 $\mu$m. The repetition rate of the pulsed radiation IRD may be of an order of magnitude of 1 kHz to 100 MHz. The pulse energies may have an order of magnitude of 0.1 $\mu$J to 100 $\mu$J, for example 1 - 10 $\mu$J. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulse pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a spectral power density in the entire wavelength band of the output radiation of at least 0.01 mW/nm. The spectral power density in the entire wavelength band of the broadband output radiation may be at least 3 mW/nm.

Figure 5C(b) shows a modified embodiment of the above discussed HC-PCFs with a single ring of tubular capillaries. In the example of Figure 5C(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 5A and Figures 5C (a) and (b) may have a circular cross-sectional shape. Other shapes are also possible for the tubular capillaries, like elliptical or polygonal cross-sections. Additionally, the solid material of the tubular capillaries of the examples of Figure 5A and Figures 5C (a) and (b) may comprise plastic material, like PMA, glass, like silica, or soft glass.

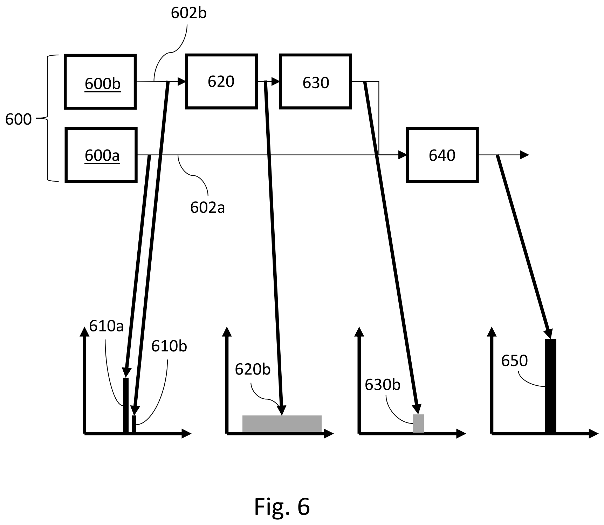

Figure 6 illustrates a wavelength-controllable light source. Wavelength-controllable light source 600 can be, for example, a light source used with various scatterometers as described herein that may be used to analyze a target (e.g., reconstruct surface or layer features, determine alignment, etc.). Wavelength-controllable light source 600 can be configured to provide light of the needed wavelength ranges and/or power for performing such measurements.

Wavelength-controllable light source 600 can include one or more light sources configured to provide light pulses. In some embodiments, the light source(s) 600 can include a laser, a filtered broad-spectrum light source, etc. The present disclosure provides methods of efficiently generating/amplifying light from a seed pulse to have the needed amplification for use in diagnostics, such as discussed above. The disclosed systems and methods can include amplification of low energy light rather than relying on generation and then rejection (or spectral filtering) of high energy light. As shown, there can be first optical path 602a for a high energy pulse 610a from the light source(s) (e.g., first light source 600a). High energy pulse(s) can act as a pump pulse for an optical amplifier (e.g., a nonlinear amplifier 640). There can also be second optical path 602b for low energy pulse 610b also from the light source(s) (e.g., second light source 600b). Low energy pulse 610b can act as a seed pulse, which can be amplified the amount needed by such optical amplifiers. In some embodiments, as shown in Figure 6, first light source 600a can be configured to generate high energy pulse 610a and second light source 600b can be configured to generate low energy pulse 610b. In some embodiments, the two light sources may be synchronized such that their pulses arrive sufficiently simultaneously at an amplifier (e.g., so that the high energy pump pulse can amplify the low energy seed pulse). In other embodiments, a single light source (e.g., a laser) can be utilized to generate light pulses, with wavelength-controllable light source further 600 including a splitter configured to split the light pulses into high energy pulse 610a and low energy pulse 610b. The splitter can be, for example, an intensity-based splitter, a polarization splitter, a wavefront splitter, or a diffractive splitter.

In some embodiments, the laser (or other light source) can be configured to generate the light pulses to have a duration between 10 fs and 100 nanoseconds, between 1 and 1000 picoseconds, etc. Also, an energy ratio of high energy pulse 610a to low energy pulse 610b can be, for example, at least 4 (i.e., 80% of the energy in the high energy pulse and 20% in the low energy pulse). In various embodiments, the energy ratio can be at least 10, 50, 99, etc. Higher ratios (e.g., a smaller fraction of energy in the low energy pulse) can be useful for providing a low-energy supercontinuum for selective amplification, as described herein.

The four plots in the bottom portion of Figure 6 illustrate examples of the various pulses and supercontinuum. The X axes are wavelength and Y axes generally depict logarithmic energy density but are not shown strictly to scale. Accordingly, the examples are not intended to specify or limit the disclosed embodiments in any way. The first plot shows that high energy pulse 610a from first light source 600a can have an energy of about 2 orders of magnitude higher than low energy pulse 610b (e.g., the energy ratio of 99 described above). The two pulses are shown separated for illustrative purposes but in some cases may have the same wavelength and bandwidth. The second plot shows low energy pulse 610b spectrally broadened into supercontinuum 620b. The third plot shows supercontinuum 620b filtered into a desired amplification band (i.e., a narrower wavelength band that is desired for amplification). The fourth plot shows the amplified light pulse 650 (e.g., increased 5 orders of magnitude from the initial seed pulse, and with very little out-of-band light due to the filtering of the seed pulse).

Wavelength-controllable light source 600 can also include supercontinuum generator 620 on second optical path 602b to spectrally broaden low energy pulse 610b into supercontinuum 620b. Additional details of supercontinuum generators are described herein, for example with reference to Figures 5A-C. In some embodiments, supercontinuum generator 620 can include a photonic crystal fiber that can receive low energy pulse 610b and spectrally broaden wavelengths of low energy pulse 610b into supercontinuum 620b. In some embodiments, the photonic crystal fiber can be a solid-core photonic crystal fiber. The solid-core photonic crystal fiber can include a rare earth dopant in a core of the solid-core photonic crystal fiber. In other embodiments, the photonic crystal fiber can be a hollow-core photonic crystal fiber that has a fluid working medium, for example a molecular gas (e.g., $H_2$, $D_2$, $O_2$, $N_2$, $CO_2$, $N_2O$, and $CH_4$, etc.) or a noble gas (e.g., Ar, Ne, Kr, Xe, etc.). In some embodiments, low energy pulse 610b can be spectrally broadened into supercontinuum 620b to include light with a wavelength in the range of 100 nm to 10000 nm, 300 nm to 2000 nm, etc.

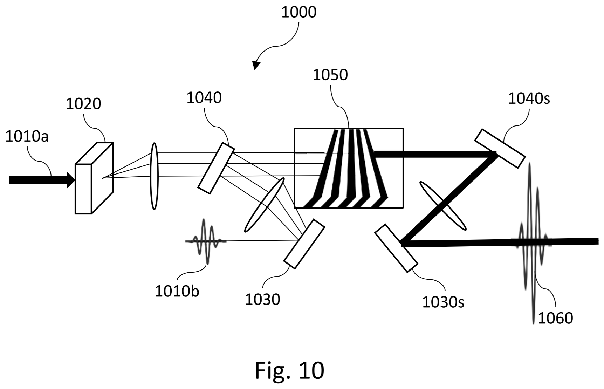

Wavelength-controllable light source 600 can also include tunable filter 630 on second optical path 602b to generate seed pulse 630b by passing supercontinuum 620b that is within an amplification band. Examples of amplification bands can include those having a bandwidth of 0.1nm to 50 nm about a central wavelength, 1.0 to 10 nm, etc. In various embodiments, tunable filter 630 can include an acusto-optic tunable filter. In some embodiments, tunable filter 630 can include a device with filtering locations having different filtering characteristics, with tunable filter 630 configured to be movable to different positions to place the supercontinuum onto the different filtering locations. In some embodiments, tunable filter 630 can include a device with filtering locations having different filtering characteristics, with second optical path including a light-directing element (e.g., a rotatable/translatable mirror, prism, etc.) that is adjustable to direct supercontinuum 620b onto the different filtering locations. An example of such an adjustable light-directing element is shown with reference to Figure 10. In yet other embodiments, tunable filter 630 can include a grating light valve. In some embodiments, tunable filter 630 can include a number of filters and a digital micromirror device configured to adjustably direct the supercontinuum to a selected filter.

The present disclosure provides that both supercontinuum generation and nonlinear amplification can utilize nonlinear effects in crystals, however using differing processes that result in these different effects. In general, supercontinuum generation is an effect due to spectral broadening of light due to nonlinear effects. Amplification is due to mixing of light in the nonlinear medium, and this mixing provides amplification of an input seed pulse. Accordingly, various features of nonlinear crystals described herein (e.g., in the context of supercontinuum generation) can also be present in the nonlinear amplifier (which may use the same or similar nonlinear crystal as a supercontinuum generator).

Wavelength-controllable light source 600 can also include nonlinear amplifier 640 configured to receive seed pulse 630b and high energy pulse 610a and generate amplified light pulse 650 by amplifying seed pulse 630b with a portion of high energy pulse 610a. In some embodiments, nonlinear amplifier 640 can include a gas-filled hollow core photonic crystal fiber.

In some embodiments, nonlinear amplifier 640 can be configured to produce amplified light pulse 650 to have an optical density of at least 3.0, the optical density (OD) representing (the logarithm of) a ratio of power of the amplified light pulse within the amplification band ($P_{in\text{-}band}$) to power outside the amplification band ($P_{our\text{-}of\text{-}band}$).

$$OD = \log_{10} \frac{P_{in-band}}{P_{out-of-band}}$$

However, due for example to the very low energy seed pulse and the pre-amplification filtering, the realized optical density can sometimes be much higher, such as 4.0, 5.0, 8.0, 10.0, etc.

In some embodiments, nonlinear amplifier 640 can be configured to generate amplified light pulse 650 utilizing three-wave mixing, for example using a nonlinear crystal that acts as a gain medium. Three-wave mixing (TWM) is a nonlinear optical process that occurs in media exhibiting a second-order nonlinear susceptibility. In TWM, three optical waves interact within such a medium in a manner that conserves both energy and momentum (phase-matching). One prominent form is optical parametric amplification (OPA), wherein a strong pump field at frequency $\omega_1$ amplifies a weaker signal at frequency $\omega_2$, simultaneously generating an idler photon at $\omega_3 = \omega_1 - \omega_2$. Other processes can include sum-frequency generation (SFG) and difference-frequency generation (DFG). In SFG, two input photons at frequencies $\omega_1$ and $\omega_2$ combine to generate an output photon at frequency $\omega_3 = \omega_1 + \omega_2$. In DFG, the nonlinear medium facilitates the generation of a photon at the difference frequency $\omega_3 = |\omega_1 - \omega_2|$, typically resulting in radiation at longer wavelengths. Efficient three-wave mixing requires fulfillment of both energy conservation and phase-matching conditions. The latter condition, expressed as $k_3 = k_i \pm k_2$ (where k denotes the wavevector), ensures constructive interference of the generated wave throughout the propagation length of the nonlinear medium. Achieving phase matching often involves techniques such as birefringent phase matching, quasi-phase matching (e.g., in periodically poled materials), or modal phase matching in engineered waveguides or fibers. The efficiency of TWM processes depends on parameters including the nonlinear coefficient of the medium, the spatial overlap of interacting modes, the intensity of the pump field, and the interaction length.

In some embodiments, nonlinear amplifier 640 can be configured to generate amplified light pulse 650 utilizing four-wave mixing, for example using a gas-filled hollow-core photonic crystal fiber. Four-wave mixing (FWM) is a nonlinear optical process arising from the third-order nonlinear susceptibility of a medium, denoted as $\chi^{(3)}$. In FWM, the interaction of three input optical fields within a $\chi^{(3)}$-nonlinear medium gives rise to a fourth field, in a manner that conserves both energy and momentum (phase-matching). A general condition for FWM is expressed as $\omega_4 = \omega_1 + \omega_2 - \omega_3$, where $\omega$ represents the angular frequencies of the interacting waves. Depending on the choice of pump and seed frequencies, FWM can manifest in various forms, including degenerate FWM (where two or more interacting frequencies are identical) and non-degenerate FWM (where all are distinct). Efficient FWM requires both energy conservation and phase-matching, the latter typically expressed as $k_4 = k_1 + k_2 - k_3$, where k denotes the respective wavevectors. Phase matching can be achieved or enhanced by tailoring the dispersion properties of the medium, for example through dispersion engineering in photonic crystal fibers, microresonators, or integrated waveguides. The efficiency of FWM depends on factors including the nonlinear refractive index of the medium, the pump intensity, the interaction length, and the degree of phase mismatch.

In summary, the amplification systems and methods described with particular reference to Figure 6 provide amplification of a low-energy seed pulse to a sufficient energy, while simultaneously avoiding a corresponding amplification of out-of-band light. As such, the contrast (e.g., the ratio OD) can be much higher than provided by conventional methods.

In some embodiments, particular combinations of light sources and types of nonlinear amplifiers can be utilized. The following provides several non-limiting examples of such. In some embodiments, the laser can be an oscillator and nonlinear amplifier can include a gas-filled hollow core photonic crystal fiber. In various embodiments, the high energy pulse can have an energy between 200 nJ and 400 nJ (e.g., 300 nJ), a duration between 100 fs and 200 fs (e.g., 140 fs) and/or a pulse repetition rate between 5 and 60 MHz (e.g., 40 MHz). Low energy pulse can have an energy between 10 pJ and 200 pJ (e.g., 100 pJ) and/or a duration between 100 and 200 fs (e.g., 140 fs). Also, a gas inside the gas-filled hollow core photonic crystal fiber can include nitrous-oxide at between 5 - 10 bar, krypton at between 2 - 10 bar, or xenon at between 1 - 4 bar.

The present disclosure provides wavelength separation systems that allow, for example, selection between three different wavelengths of light (e.g., corresponding to a signal component, pump component, or idler component) to be used by a sensor such as a scatterometer or other diagnostic. Such components can arise due to nonlinear mixing (e.g., three-wave mixing), which can result from nonlinear amplification methods. Embodiments of the wavelength separation system can include a number of Pockels cells configured to allow a change of polarizations of components of light. There can also be a number of polarizing beam splitter(s) configured to reflect (or pass but redirect) light of a first polarization and pass (e.g., without redirection) light of a second polarization. As explained below, the wavelength separation system can be configured with combinations of polarizing beam splitters and Pockels cells arranged to allow only one of the components to pass through (e.g., an amplified signal component). However, in some embodiments, depending on the features of certain components in the system (e.g., dichroic mirrors) and the operation of the Pockels cells, two or more components can be allowed to pass through.

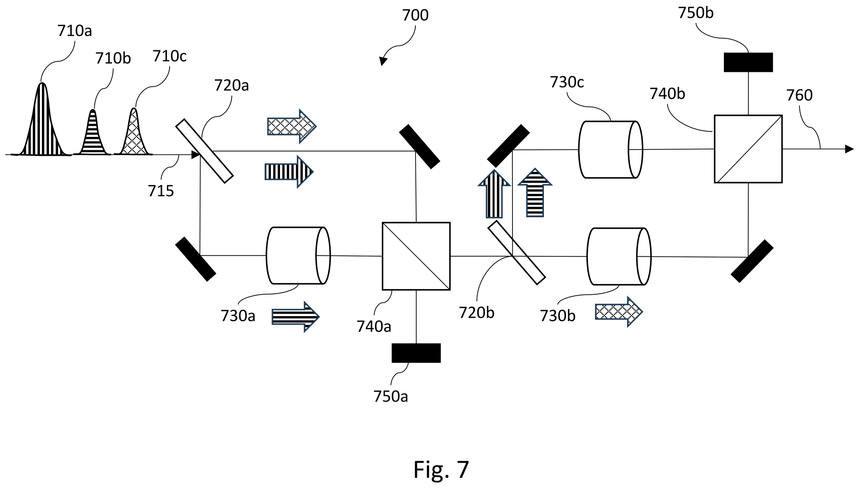

Figure 7 illustrates a first embodiment of a wavelength separation system. Wavelength separation system 700 can include input 715 (e.g., a fiber optic, an open optical beam path, etc.) can receive light, for example, in a first wavelength band (e.g., corresponding to pump component 710a), a second wavelength band (e.g., corresponding to signal component 710b), and a third wavelength band (e.g., corresponding to idler component 710c). In some embodiments, such as depicted in Figure 7, the wavelength bands do not overlap and thus form at least three separated wavelength bands. In other embodiments, two or more of the wavelength bands can have a degree of overlapping (e.g., 10%, 20%, etc.). For illustrative purposes they are depicted with different hatch patterns to match arrows shown also in the figure. The components can reach first dichroic mirror 720a configured to separate signal component 710b and direct signal component 710b to first Pockels cell 730a. The disclosed Pockels cells can be part of combinations of one or more Pockels cells and one or more polarizing beam splitters. The combinations can then receive light from one or more of the wavelength bands. For the respective combinations, the Pockels cells can be configured to control polarization of received light and the polarizing beam splitter(s) receives light from the Pockels cells. The polarizing beam splitter can be arranged to let through light of a first polarization and to redirect light of a second polarization (e.g., to another optical component or a beam dump). As such, the combinations (of Pockels cell(s) and polarizing beam splitter(s)) can be arranged to send the light of one wavelength band to output 760. Output 760 can similarly be, for example, a fiber optic, an optical path, etc.

In the example of Figure 7, first Pockels cell 730a, when energized, can change the polarization of signal component 710b (e.g., from horizontal to vertical) such that its polarization now differs from idler component 710c and pump component 710a. The components then reach first polarizing beam splitter 740a that is configured to pass one component with a certain polarization, in this case signal component 710b. This configuration can be based on both the choice of polarization that passes and also on the orientation of first polarizing beam splitter 740a. If first Pockels 730a cell is not energized, the polarization of signal component 710b is unchanged and so signal component 710b reflects and is directed to first beam dump 750a. Assuming signal component passes, the components then reach second dichroic mirror 720b configured to separate idler component 710c and direct idler component 710c to second Pockels cell 730b. In some embodiments, idler component 710c can have an initial polarization different than signal component 710b and pump component 710a. If second Pockels cell 730b is energized, the polarization of idler component 710c is changed such that when idler component 710c reaches second polarizing beam splitter, its configuration also allows idler component 710c to pass to second beam dump 750b. Otherwise, idler component 710c can pass through second polarizing beam splitter 740b and be output. Meanwhile, pump component 710a and signal component 710b that were reflected by second dichroic mirror 720b arrive at third Pockels cell 730c that can be configured to receive pump component 710a and signal component 710b, where pump component 710a and signal component 710b have different polarizations due to signal component 710b passing through first Pockels cell. Thus, depending on whether third Pockels cell 730c is energized, only one of signal component 710b or pump component 710a is allowed to pass, the other component being directed to second beam dump 750b. In this embodiment, the polarizing beam splitters utilized may have a comparatively limited spectral coverage (e.g., 400-700 nm). The following embodiment describes use of polarizing beam splitters with significantly larger spectral coverage.

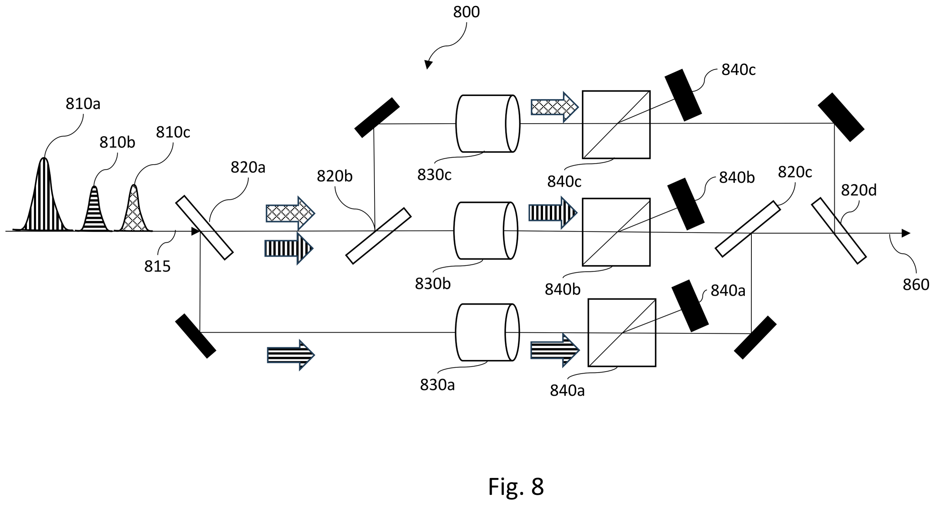

Figure 8 illustrates a second embodiment of a wavelength separation system. In some ways similar to the embodiment of Figure 7, wavelength separation system 800 can receive light at input 815 and uses a combination of dichroic mirrors, Pockels cells, and polarizing beam splitters to selectively deliver either one, two, or all three components to output 860. In particular, like wavelength separation system 700, this embodiment can advantageously allow for the selection of only one component as output.

Wavelength separation system 800 can include at least two dichroic mirrors (820a, 820b) to split the three or more wavelength bands (corresponding at least to the three depicted components) into three separate optical paths. This can be seen with first dichroic mirror 820a reflecting signal component 810b to first Pockels cell 830a. Second dichroic mirror receives pump component 810a and idler component 810c and passes pump component 810a to second Pockels cell 830b and reflects idler component 810c to third Pockels cell 830c. There can be at least three polarizing beam splitters (840a, 840b, 840c) configured to allow a wavelength band through based on whether a corresponding Pockels cell is energized to change the polarization of the corresponding wavelength band. Two additional dichroic mirrors (820c, 820d) can be located after the polarizing beam splitters to allow the selected component (whichever it may be) to be on a single (output) optical path. In some embodiments, the polarizing beam splitters can have a larger spectral range (e.g., 300 nm to 1100 nm).

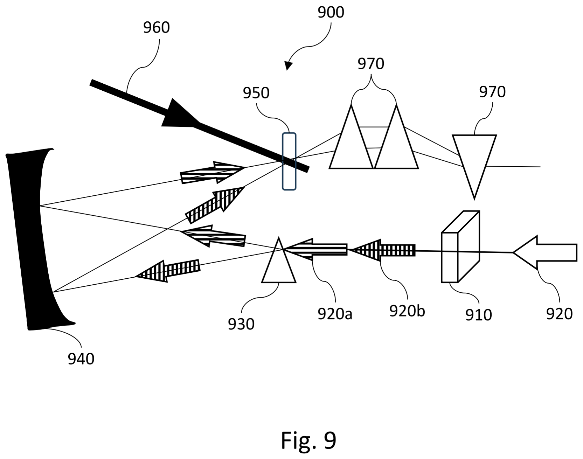

Figure 9 illustrates a broadband amplifier with fast wavelength switching. By way of introduction, broadband optical parametric amplifiers (OPAs) with the ability to switch the amplified wavelength can do so by having a nonlinear crystal mounted on a rotation stage. By rotating the crystal, phase matching can be satisfied for different wavelengths. However, the rotation (and thus switching) can be comparatively slow (e.g., ~ 100 ms). Alternatively, and instead of rotating the crystal, one can achieve broadband phase matching in the OPA process by angularly dispersing light for amplification (e.g., a seed pulse) before it is mixed by the pump pulse on the crystal. In this configuration each seed wavelength can be mixed by the pump pulse on the crystal at different angle, hence the broadband phase matching can be satisfied. However, this retains the problem of the comparatively slow switching times.

In the example of Figure 9, system 900 can include an adjustable color filter 910 configured to receive multi-wavelength light 920 and to selectively pass seed light in an amplification band (i.e., a band or wavelength range desired for later amplification). Figure 9 illustrates two examples of passed seed light (920a, 920b) of different wavelengths based on the selected amplification band and they are distinguished by the different optical paths and the depicted patterns. In some embodiments, seed light 920 can be a laser pulse, continuous wave laser beam, etc. In some embodiments, adjustable color filter 910 can include an acusto-optical tunable filter. In other embodiments, adjustable color filter 910 can have filtering locations (e.g., at different spatial locations on the filter) having different filtering characteristics (e.g., passing a certain wavelength band of light). Adjustable color filter 910 can then also be configured to be movable to different positions to place the seed light onto the different filtering locations. In some embodiments, adjustable color filter 910 can have filtering locations having different filtering characteristics. Instead of (or in addition to) moving the adjustable color filter 910, the system can include a light-directing element (e.g., a mirror or prism) that can be adjusted to direct the seed light 920 onto the different filtering locations. In some embodiments, adjustable color filter 910 can include a grating light valve or a number of filters and a digital micromirror device configured to adjustably direct the seed light to a selected filter.

System 900 can include diffractive element 930 that can be configured to disperse seed light (920a or 920b) from adjustable color filter 910 into different optical paths based on the amplification band. In various embodiments, diffractive element 930 can include a prism, a diffraction grating, etc.

System 900 can include mirror 940 that can be configured to direct the seed light (920a or 920b) from diffractive element 930 and to focus the seed light (920a or 920b) to a focal point, e.g. to nonlinear amplifier 950. In some embodiments, mirror 940 can be a parabolic mirror or can comprise independent mirrors or a multi-facetted mirror whose surfaces direct light on the different optical paths to nonlinear amplifier 950.

System 900 can include nonlinear amplifier 950 configured to receive pump light 960 and configured to receive seed light (920a or 920b) at the focal point from different angles based on the different optical paths. The different optical paths can thereby result in phase matching with pump light 960 in nonlinear amplifier 950 causing amplification of seed light (920a or 920b). As with other embodiments of the present disclosure, nonlinear amplifier can include a non-linear crystal that acts as a gain medium.

Similarly, after amplification by the nonlinear amplifier, some embodiments can include a set of diffractive elements 970 (e.g., prisms, mirrors, diffraction gratings, etc.) arranged to receive amplified seed light that is angularly dispersed from the different optical paths. Once received, the arrangement of the set of diffractive elements 970 can cause the amplified seed light to be collimated (e.g., on a single output path).

Figure 10 illustrates a wavelength-controllable light source utilizing fast deflection of a pump beam. As described in further detail below, this embodiment allows for amplification of a seed beam in an amplifier (such as a nonlinear crystal) while also able to have fast switching time for selecting different wavelengths of light to be amplified. In this embodiment, fast switching can be realized by having wavelength-controllable light source 1000 can include light deflector 1020 configured to selectively direct pump beam 1010a into one of a number of options for pump optical paths. The disclosed light deflectors can be comparatively fast, such as having a response time of less than 10 microseconds. Such light deflectors can include an acousto-optic light deflector, a steering mirror such as a tiltable or rotatable mirror, which can be tilt controllable to two or more (or continuous amount of) positions that thereby can select the angle of the reflected light.

Wavelength-controllable light source 1000 can include dispersive element 1030 configured to disperse seed beam 1010b into a number of seed optical paths. Examples of dispersive element 1030 can include a reflective diffraction grating, a prism, etc.

Wavelength-controllable light source 1000 can also include dichroic mirror 1040 where a selected pump optical path passes through to intersect and become collinear with one of the seed optical paths that are reflected off dichroic mirror 1040.

Wavelength-controllable light source can include nonlinear amplifier 1050 configured to generate an amplified seed beam using the pump beam. Amplification of seed beam 1010b can be based on a location where the selected pump optical path reaches nonlinear amplifier 1050. And, in some embodiments, pump beam 1010a and seed beam 1010b can be frequency doubled to reduce the wavelength of the amplified seed beam.

In some embodiments, nonlinear amplifier 1050 can be a fanout crystal. As used herein, pitch size refers to the center-to-center spacing between adjacent output channels. The pitch size may vary at different spatial positions along the dispersed pump optical paths to provide phase matching of the pump beam and corresponding seed wavelength. Each input beam, upon passing through the birefringent crystal, is split into two orthogonally polarized beams that propagate with a lateral displacement determined by the birefringence and the crystal geometry. When several input beams are launched into the crystal in parallel, the output can be an expanded array of beams, with the relative separation between them defined by the pitch size. This spacing can be measured at the output face as the distance between the centers of neighboring beams, regardless of whether they originated from the same or different input positions. In some embodiments, the pitch size may range from 6 to 12 micrometers.

The amplified light 1060, after leaving fanout crystal, can still have a spatial spread to it, as even the narrower amplified band still has a non-zero bandwidth. To reduce this spatial spread and put the amplified output on the same optical path, the above elements can provide the same focusing and reflecting that occurred on the input side of fanout crystal to disperse the incoming seed beam. After nonlinear amplifier 1050, wavelength-controllable light source 1000 can include a symmetric mirror 1040 and a symmetric dispersive element 1030 that mirror dichroic mirror 1040 and dispersive element 1030 to cause amplified seed beams for different selected pump optical paths to be on a same output optical path.

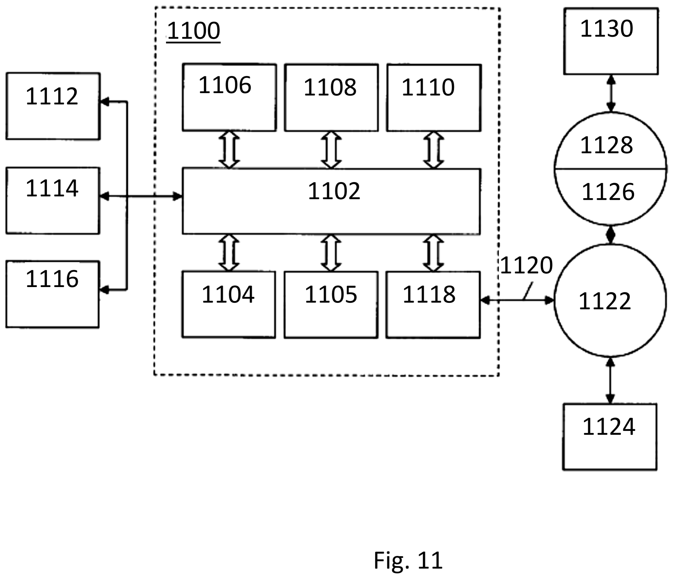

Figure 11 is a block diagram that illustrates a computer system 1100 that may assist in implementing any of the embodiments of the present disclosure. Computer system 1100 includes a bus 1102 or other communication mechanism for communicating information, and a processor 1104 (or multiple processors 1104 and 1105) coupled with bus 1102 for processing information. Computer system 1100 also includes a main memory 1106, such as a random access memory (RAM) or other dynamic storage device, coupled to bus 1102 for storing information and instructions to be executed by processor 1104. Main memory 1106 also may be used for storing temporary variables or other intermediate information during execution of instructions to be executed by processor 1104. Computer system 1100 further includes a read only memory (ROM) 1108 or other static storage device coupled to bus 1102 for storing static information and instructions for processor 1104. A storage device 1110, such as a magnetic disk or optical disk, is provided and coupled to bus 1102 for storing information and instructions.

Computer system 1100 may be coupled via bus 1102 to a display 1112, such as a cathode ray tube (CRT) or flat panel or touch panel display for displaying information to a computer user. An input device 1114, including alphanumeric and other keys, is coupled to bus 1102 for communicating information and command selections to processor 1104. Another type of user input device is cursor control 1116, such as a mouse, a trackball, or cursor direction keys for communicating direction information and command selections to processor 1104 and for controlling cursor movement on display 1112. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1100 in response to processor 1104 executing one or more sequences of one or more instructions contained in main memory 1106. Such instructions may be read into main memory 1106 from another computer-readable medium, such as storage device 1110. Execution of the sequences of instructions contained in main memory 1106 causes processor 1104 to perform the process steps described herein. One or more processors in a multi-processing arrangement may also be employed to execute the sequences of instructions contained in main memory 1106. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1104 for execution. Such a medium may take many forms, including but not limited to, non-volatile media, volatile media, and transmission media. Non-volatile media include, for example, optical or magnetic disks, such as storage device 1110. Volatile media include dynamic memory, such as main memory 1106. Transmission media include coaxial cables, copper wire and fiber optics, including the wires that comprise bus 1102. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1104 for execution. For example, the instructions may initially be borne on a magnetic disk of a remote computer. The remote computer can load the instructions into its dynamic memory and send the instructions over a telephone line using a modem. A modem local to computer system 1100 can receive the data on the telephone line and use an infrared transmitter to convert the data to an infrared signal. An infrared detector coupled to bus 1102 can receive the data carried in the infrared signal and place the data on bus 1102. Bus 1102 carries the data to main memory 1106, from which processor 1104 retrieves and executes the instructions. The instructions received by main memory 1106 may optionally be stored on storage device 1110 either before or after execution by processor 1104.

Computer system 1100 also preferably includes a communication interface 1118 coupled to bus 1102. Communication interface 1118 provides a two-way data communication coupling to a network link 1120 that is connected to a local network 1122. For example, communication interface 1118 may be an integrated services digital network (ISDN) card or a modem to provide a data communication connection to a corresponding type of telephone line. As another example, communication interface 1118 may be a local area network (LAN) card to provide a data communication connection to a compatible LAN. Wireless links may also be implemented. In any such implementation, communication interface 1118 sends and receives electrical, electromagnetic or optical signals that carry digital data streams representing various types of information.

Network link 1120 typically provides data communication through one or more networks to other data devices. For example, network link 1120 may provide a connection through local network 1122 to a host computer 1124 or to data equipment operated by an Internet Service Provider (ISP) 1126. ISP 1126 in turn provides data communication services through the worldwide packet data communication network, now commonly referred to as the "Internet" 1128. Local network 1122 and Internet 1128 both use electrical, electromagnetic or optical signals that carry digital data streams. The signals through the various networks and the signals on network link 1120 and through communication interface 1118, which carry the digital data to and from computer system 1100, are exemplary forms of carrier waves transporting the information.

Computer system 1100 may send messages and receive data, including program code, through the network(s), network link 1120, and communication interface 1118. In the Internet example, a server 1130 might transmit a requested code for an application program through Internet 1128, ISP 1126, local network 1122 and communication interface 1118. One such downloaded application may provide for one or more of the techniques described herein, for example. The received code may be executed by processor 1104 as it is received, and/or stored in storage device 1110, or other non-volatile storage for later execution. In this manner, computer system 1100 may obtain application code in the form of a carrier wave.

Additional embodiments have been disclosed in the subsequent list of clauses that are numbered with Roman numerals:

> i. A wavelength-controllable light source comprising:
>
> > one or more light sources configured to provide light pulses;
> > a first optical path for a high energy density pulse from the one or more light sources;
> > a second optical path for a low energy density pulse from the one or more light sources;
> > a supercontinuum generator on the second optical path, the supercontinuum generator configured to broaden the low energy density pulse into a supercontinuum;
> > a tunable filter on the second optical path, the tunable filter configured to generate a seed pulse by passing the supercontinuum that is within an amplification band; and
> > a nonlinear amplifier configured to receive the seed pulse and the high energy density pulse and generate an amplified light pulse by amplifying the seed pulse with a portion of the high energy density pulse.

ii. The wavelength-controllable light source of clause i, the one or more light sources comprising a laser, and the wavelength-controllable light source further comprising a splitter configured to split the light pulses into the high energy density pulse and the low energy density pulse.

iii. The wavelength-controllable light source of clause ii, the splitter comprising one or more of an intensity-based splitter, a polarization splitter, a wavefront splitter, or a diffractive splitter.

iv. The wavelength-controllable light source of clause i, the one or more light sources comprising:

> a first light source configured to generate the high energy density pulse; and
> a second light source configured to generate the low energy density pulse.

v. The wavelength-controllable light source of clause i, wherein the one or more light sources are configured to generate the light pulses to have a duration between 10 fs and 100 nanoseconds.

vi. The wavelength-controllable light source of clause i, wherein the one or more light sources are configured to generate the light pulses to have a duration between 1 and 1000 picoseconds.

vii. The wavelength-controllable light source of clause i, wherein an energy ratio of the high energy density pulse to the low energy density pulse is at least 4.

viii. The wavelength-controllable light source of clause vii, wherein an energy ratio of the high energy density pulse to the low energy density pulse is at least 99.

ix. The wavelength-controllable light source of clause i, the supercontinuum generator comprising a photonic crystal fiber that receives the low energy density pulse and broaden wavelengths of the low energy density pulse into the supercontinuum.

x. The wavelength-controllable light source of clause ix, wherein the photonic crystal fiber is a solid-core photonic crystal fiber.

xi. The wavelength-controllable light source of clause x, the solid-core photonic crystal fiber comprising a rare earth dopant in a core of the solid-core photonic crystal fiber.

xii. The wavelength-controllable light source of clause ix, wherein the photonic crystal fiber is a hollow-core photonic crystal fiber comprising a fluid working medium.

xiii. The wavelength-controllable light source of clause xii, the fluid working medium comprising a molecular gas or a noble gas.

xiv. The wavelength-controllable light source of clause i, wherein the low energy pulse broadened into the supercontinuum includes light with a wavelength in a range of 100 nm to 10000 nm.

xv. The wavelength-controllable light source of clause xiv, wherein the light is in the range of 300 nm to 2000 nm.

xvi. The wavelength-controllable light source of clause i, the tunable filter comprising an acusto-optical tunable filter.

xvii. The wavelength-controllable light source of clause i, the tunable filter comprising filtering locations having different filtering characteristics, the tunable filter configured to be movable to different positions to place the supercontinuum onto the different filtering locations.

xviii. The wavelength-controllable light source of clause i, the tunable filter comprising filtering locations having different filtering characteristics, the second optical path including a light-directing element that is adjustable to direct the supercontinuum onto the different filtering locations.

xix. The wavelength-controllable light source of clause i, the tunable filter comprising a grating light valve.

xx. The wavelength-controllable light source of clause i, the tunable filter comprising a plurality of filters and a digital micromirror device configured to adjustably direct the supercontinuum to a selected filter.

xxi. The wavelength-controllable light source of clause i, wherein the amplification band has a bandwidth of 0.1nm to 50 nm about a central wavelength.

xxii. The wavelength-controllable light source of clause i, the nonlinear amplifier comprising a gas-filled hollow core photonic crystal fiber.

xxiii. The wavelength-controllable light source of clause i, the nonlinear amplifier configured to produce the amplified light pulse to have an optical density of at least 3.0, the optical density representing a ratio of power of the amplified light pulse within the amplification band to power outside the amplification band.

xxiv. The wavelength-controllable light source of clause i, the nonlinear amplifier configured to generate the amplified light pulse utilizing three-wave mixing.

xxv. The wavelength-controllable light source of clause xxiv, wherein the nonlinear amplifier includes a non-linear crystal that acts as a gain medium.

xxvi. The wavelength-controllable light source of clause i, the nonlinear amplifier configured to generate the amplified light pulse utilizing four-wave mixing.

xxvii. The wavelength-controllable light source of clause xxvi, wherein the nonlinear amplifier is a gas-filled hollow-core photonic crystal fiber.

xxviii. The wavelength-controllable light source of clause ii, wherein the laser is an oscillator and the nonlinear amplifier comprises a gas-filled hollow core photonic crystal fiber.

xxix. The wavelength-controllable light source of clause xxviii, wherein the high energy density pulse has an energy between 200 nJ and 400 nJ.

xxx. The wavelength-controllable light source of clause xxviii, wherein the high energy density pulse has a duration between 100 fs and 200 fs.

xxxi. The wavelength-controllable light source of clause xxviii, wherein the laser has a pulse repetition rate between 5 and 60 MHz.

xxxii. The wavelength-controllable light source of clause xxviii, wherein the low energy density pulse has an energy between 10 pJ and 200 pJ.

xxxiii. The wavelength-controllable light source of clause xxviii, wherein the low energy density pulse has a duration between 100 fs and 200 fs.

xxxiv. The wavelength-controllable light source of clause xxviii, wherein a gas inside the gas-filled hollow core photonic crystal fiber includes one of nitrous-oxide at between 5 and 10 bar, krypton at between 2 and 10 bar, or xenon at between 1 and 4 bar.

xxxv. A wavelength separation system comprising:

a plurality of Pockels cells configured to allow a change of polarizations of components of light, the components comprising an idler component, a pump component, and a signal component; and

a polarizing beam splitter configured to reflect light of a first polarization and pass light of a second polarization, wherein the polarizing beam splitter is oriented to allow only one of the components to pass through.

xxxvi. The wavelength separation system of clause xxxv, further comprising a first dichroic mirror configured to separate the signal component and direct the signal component to a first Pockels cell of the plurality of Pockels cells.

xxxvii. The wavelength separation system of clause xxxv, further comprising a second dichroic mirror configured to separate the idler component and direct the idler component to a second Pockels cell of the plurality of Pockels cells.

xxxviii. The wavelength separation system of clause xxxv, wherein a third Pockels cell of the plurality of Pockels cells is configured to receive the pump component and the signal component, wherein the pump component and the signal component have different polarizations due to the signal component passing through a first Pockels cell.

xxxix. The wavelength separation system of clause xxxv, further comprising:

two dichroic mirrors to split the components into three separate optical paths;

two additional polarizing beam splitters, the three polarizing beam splitters configured to allow a component through based on whether a corresponding Pockels cell of the plurality of Pockels cells is energized to change the polarization of the corresponding component, wherein a selection of which Pockels cells are energized causes a selected component to be output along an output optical path.

xl. A system comprising:

an adjustable color filter configured receive a multi-wavelength seed and to selectively pass seed light in an amplification band;
a diffractive element configured to disperse the seed light from the adjustable color filter into different optical paths based on the amplification band;
a mirror configured to direct the seed light to focus the seed light from the diffractive element to a focal point; and
a nonlinear amplifier configured to receive the seed light at the focal point from different angles based on the different optical paths, wherein the different optical paths result in phase matching with pump light in the nonlinear amplifier causing amplification of the seed light.

xli. The system of clause xl, wherein the seed light is a laser pulse.

xlii. The system of clause xl, wherein the seed light is a continuous wave laser beam.

xliii. The system of clause xl, the adjustable color filter comprising an acusto-optical tunable filter.

xliv. The system of clause xl, the adjustable color filter comprising filtering locations having different filtering characteristics, the adjustable color filter configured to be movable to different positions to place the seed light onto the different filtering locations.

xlv. The system of clause xl, the adjustable color filter comprising filtering locations having different filtering characteristics, the system including a light-directing element that is adjustable to direct the seed light onto the different filtering locations.

xlvi. The system of clause xl, the adjustable color filter comprising a grating light valve.

xlvii. The system of clause xl, the adjustable color filter comprising a plurality of filters and a digital micromirror device configured to adjustably direct the seed light to a selected filter.

xlviii. The system of clause xl, wherein the diffractive element is a prism.

xlix. The system of clause xl, wherein the diffractive element is a diffraction grating.

l. The system of clause xl, further comprising a set of diffractive elements arranged to receive the amplified seed light that is angularly dispersed from the different optical paths, the arrangement of the set of diffractive elements causing the amplified seed light to be collimated.

li. The system of clause xl, wherein the nonlinear amplifier includes a non-linear crystal that acts as a gain medium.

lii. A wavelength-controllable light source comprising:

a light deflector configured to selectively direct a pump beam into one of a plurality of pump optical paths;
a dispersive element configured to disperse a seed beam into a plurality of seed optical paths;
a dichroic mirror where a selected pump optical path passes through to intersect and become collinear with one of the seed optical paths that are reflects off the dichroic mirror; and
a nonlinear amplifier configured to generate an amplified seed beam using the pump beam, wherein amplification of the seed beam is based on a location where the selected pump optical path reaches the nonlinear amplifier.

liii. The wavelength-controllable light source of clause lii, wherein the light deflector has a response time of less than 10 microseconds.

liv. The wavelength-controllable light source of clause lii, wherein the light deflector is an acousto-optic light deflector.

lv. The wavelength-controllable light source of clause lii, wherein the light deflector is a steering mirror.

lvi. The wavelength-controllable light source of clause lii, wherein the dispersive element is a reflective diffraction grating.

lvii. The wavelength-controllable light source of clause lii, wherein the dispersive element is a prism.

lviii. The wavelength-controllable light source of clause lii, wherein the nonlinear amplifier is a fanout crystal.

lix. The wavelength-controllable light source of clause lviii, wherein the fanout crystal has a varying pitch size at different spatial positions along the pump optical paths and provides phase matching of the pump beam and a corresponding wavelength of the seed beam.

lx. The wavelength-controllable light source of clause lix, wherein pitch size range is between 6 and 12 micrometers.

lxi. The wavelength-controllable light source of clause lix, wherein the pump beam and the seed beam are frequency doubled to reduce a wavelength of the amplified seed beam.

lxii. The wavelength-controllable light source of clause lii, further comprising a symmetric mirror and a symmetric dispersive element that mirror the dichroic mirror and the dispersive element to cause the amplified seed beam for different selected pump optical paths to be on a same output optical path.

Further embodiments are in the subsequent list of numbered clauses:

1. A wavelength-controllable light source comprising:

one or more light sources configured to provide light pulses;
a first optical path for a high energy pulse from the one or more light sources;
a second optical path for a low energy pulse from the one or more light sources;
a supercontinuum generator on the second optical path, the supercontinuum generator configured to spectrally broaden the low energy pulse into a supercontinuum;
a tunable filter on the second optical path, the tunable filter configured to generate a seed pulse by passing the supercontinuum that is within an amplification band; and
a nonlinear amplifier configured to receive the seed pulse and the high energy pulse and generate an amplified light pulse by amplifying the seed pulse with a portion of the high energy pulse.

2. The wavelength-controllable light source of clause 1, the one or more light sources comprising a laser, and the wavelength-controllable light source further comprising a splitter configured to split the light pulses into the high energy pulse and the low energy pulse.

3. The wavelength-controllable light source of clause 2, the splitter comprising one or more of an intensity-based splitter, a polarization splitter, a wavefront splitter, or a diffractive splitter.

4. The wavelength-controllable light source of clause 1, the one or more light sources comprising:

a first light source configured to generate the high energy pulse; and
a second light source configured to generate the low energy pulse.

5. The wavelength-controllable light source of clause 1, wherein the one or more light sources are configured to generate the light pulses to have a duration between 10 fs and 100 nanoseconds.

6. The wavelength-controllable light source of clause 1, wherein the one or more light sources are configured to generate the light pulses to have a duration between 1 and 1000 picoseconds.

7. The wavelength-controllable light source of clause 1, wherein an energy ratio of the high energy pulse to the low energy pulse is at least 4.

8. The wavelength-controllable light source of clause 7, wherein an energy ratio of the high energy pulse to the low energy pulse is at least 99.

9. The wavelength-controllable light source of clause 1, the supercontinuum generator comprising a photonic crystal fiber that receives the low energy pulse and spectrally broaden wavelengths of the low energy pulse into the supercontinuum.

10. The wavelength-controllable light source of clause 9, wherein the photonic crystal fiber is a solid-core photonic crystal fiber.

11. The wavelength-controllable light source of clause 10, the solid-core photonic crystal fiber comprising a rare earth dopant in a core of the solid-core photonic crystal fiber.

12. The wavelength-controllable light source of clause 9, wherein the photonic crystal fiber is a hollow-core photonic crystal fiber comprising a fluid working medium.

13. The wavelength-controllable light source of clause 12, the fluid working medium comprising a molecular gas or a noble gas.

14. The wavelength-controllable light source of clause 1, wherein the low energy pulse spectrally broadened into the supercontinuum includes light with a wavelength in a range of 100 nm to 10000 nm.

15. The wavelength-controllable light source of clause 14, wherein the light is in the range of 300 nm to 2000 nm.

16. The wavelength-controllable light source of clause 1, the tunable filter comprising an acusto-optical tunable filter.

17. The wavelength-controllable light source of clause 1, the tunable filter comprising filtering locations having different filtering characteristics, the tunable filter configured to be movable to different positions to place the supercontinuum onto the different filtering locations.

18. The wavelength-controllable light source of clause 1, the tunable filter comprising filtering locations having different filtering characteristics, the second optical path including a light-directing element that is adjustable to direct the supercontinuum onto the different filtering locations.

19. The wavelength-controllable light source of clause 1, the tunable filter comprising a grating light valve.

20. The wavelength-controllable light source of clause 1, the tunable filter comprising a plurality of filters and a digital micromirror device configured to adjustably direct the supercontinuum to a selected filter.

21. The wavelength-controllable light source of clause 1, wherein the amplification band has a bandwidth of 0.1nm to 50 nm about a central wavelength.

22. The wavelength-controllable light source of clause 1, the nonlinear amplifier comprising a gas-filled hollow core photonic crystal fiber.

23. The wavelength-controllable light source of clause 1, the nonlinear amplifier configured to produce the amplified light pulse to have an optical density of at least 3.0, the optical density representing a ratio of power of the amplified light pulse within the amplification band to power outside the amplification band.

24. The wavelength-controllable light source of clause 1, the nonlinear amplifier configured to generate the amplified light pulse utilizing three-wave mixing.

25. The wavelength-controllable light source of clause 24, wherein the nonlinear amplifier includes a non-linear crystal that acts as a gain medium.

26. The wavelength-controllable light source of clause 1, the nonlinear amplifier configured to generate the amplified light pulse utilizing four-wave mixing.

27. The wavelength-controllable light source of clause 26, wherein the nonlinear amplifier is a gas-filled hollow-core photonic crystal fiber.

28. The wavelength-controllable light source of clause 2, wherein the laser is an oscillator and the nonlinear amplifier comprises a gas-filled hollow core photonic crystal fiber.

29. The wavelength-controllable light source of clause 28, wherein the high energy pulse has an energy between 200 nJ and 400 nJ.

30. The wavelength-controllable light source of clause 28, wherein the high energy pulse has a duration between 100 fs and 200 fs.

31. The wavelength-controllable light source of clause 28, wherein the laser has a pulse repetition rate between 5 and 60 MHz.

32. The wavelength-controllable light source of clause 28, wherein the low energy pulse has an energy between 10 pJ and 200 pJ.

33. The wavelength-controllable light source of clause 28, wherein the low energy pulse has a duration between 100 fs and 200 fs.

34. The wavelength-controllable light source of clause 28, wherein a gas inside the gas-filled hollow core photonic crystal fiber includes one of nitrous-oxide at between 5 and 10 bar, krypton at between 2 and 10 bar, or xenon at between 1 and 4 bar.

35. A wavelength separation system comprising:

    an input for receiving light comprising at least three separated wavelength bands;
    an output for outputting light of one wavelength band of the at least three separated wavelength bands; and
    a plurality of combinations to receive light from one or more of the at least three separated wavelength bands, the plurality of combinations comprising:

        one or more Pockels cells; and
        a polarizing beam splitter;

    wherein, for the respective combinations, the one or more Pockels cells are configured to control polarization of received light,
wherein, for the respective combinations, the polarizing beam splitter receives light from the one or more Pockels cells and is arranged to let through light of a first polarization and to redirect light of a second polarization,
wherein, the plurality of combinations are arranged to send the light of one wavelength band to the output.

36. The wavelength separation system of clause 35, wherein, for the at least three wavelength bands, a first wavelength band corresponds to an pump component of light output from a nonlinear amplifier, a second wavelength band corresponds to a signal component of light output from the nonlinear amplifier, and a third wavelength band corresponds to an idler component of light output from the nonlinear amplifier.

37. The wavelength separation system of clause 36, further comprising a first dichroic mirror configured to separate the signal component and direct the signal component to a first Pockels cell of the one or more Pockels cells.

38. The wavelength separation system of clause 36, further comprising a second dichroic mirror configured to separate the idler component and direct the idler component to a second Pockels cell of the one or more of Pockels cells.

39. The wavelength separation system of clause 36, wherein a third Pockels cell of the one or more Pockels cells is configured to receive the pump component and the signal component, wherein the pump component and the signal component have different polarizations due to the signal component passing through a first Pockels cell.

40. The wavelength separation system of clause 35, comprising:

    at least two dichroic mirrors to split the at least three wavelength bands into three separate optical paths; and
    at least three polarizing beam splitters configured to allow a wavelength band through based on whether a corresponding Pockels cell of the one or more Pockels cells is energized to change the polarization of the corresponding wavelength band.

41. A system comprising:

    an adjustable color filter configured to receive multi-wavelength light and to selectively pass seed light in an amplification band;
    a diffractive element configured to disperse the seed light from the adjustable color filter into different optical paths based on the amplification band;

a mirror configured to direct the seed light from the diffractive element and to focus the seed light to a focal point; and

a nonlinear amplifier configured to receive pump light and configured to receive the seed light at the focal point from different angles based on the different optical paths, wherein the different optical paths result in phase matching with the pump light in the nonlinear amplifier causing amplification of the seed light.

42. The system of clause 41, wherein the seed light is a laser pulse.

43. The system of clause 41, wherein the seed light is a continuous wave laser beam.

44. The system of clause 41, the adjustable color filter comprising an acusto-optical tunable filter.

45. The system of clause 41, the adjustable color filter comprising filtering locations having different filtering characteristics, the adjustable color filter configured to be movable to different positions to place the seed light onto the different filtering locations.

46. The system of clause 41, the adjustable color filter comprising filtering locations having different filtering characteristics, the system including a light-directing element that is adjustable to direct the seed light onto the different filtering locations.

47. The system of clause 41, the adjustable color filter comprising a grating light valve.

48. The system of clause 41, the adjustable color filter comprising a plurality of filters and a digital micromirror device configured to adjustably direct the seed light to a selected filter.

49. The system of clause 41, wherein the diffractive element is a prism.

50. The system of clause 41, wherein the diffractive element is a diffraction grating.

51. The system of clause 41, further comprising a set of diffractive elements arranged to receive the amplified seed light that is angularly dispersed from the different optical paths, the arrangement of the set of diffractive elements causing the amplified seed light to be collimated.

52. The system of clause 41, wherein the nonlinear amplifier includes a non-linear crystal that acts as a gain medium.

53. A wavelength-controllable light source comprising:

a light deflector configured to selectively direct a pump beam into one of a plurality of pump optical paths;

a dispersive element configured to disperse a seed beam into a plurality of seed optical paths;

a dichroic mirror where a selected pump optical path passes through to intersect and become collinear with one of the seed optical paths that are reflected off the dichroic mirror; and

a nonlinear amplifier configured to generate an amplified seed beam using the pump beam, wherein amplification of the seed beam is based on a location where the selected pump optical path reaches the nonlinear amplifier.

54. The wavelength-controllable light source of clause 53, wherein the light deflector has a response time of less than 10 microseconds.

55. The wavelength-controllable light source of clause 53, wherein the light deflector is an acousto-optic light deflector.

56. The wavelength-controllable light source of clause 53, wherein the light deflector is a steering mirror.

57. The wavelength-controllable light source of clause 53, wherein the dispersive element is a reflective diffraction grating.

58. The wavelength-controllable light source of clause 53, wherein the dispersive element is a prism.

59. The wavelength-controllable light source of clause 53, wherein the nonlinear amplifier is a fanout crystal.

60. The wavelength-controllable light source of clause 59, wherein the fanout crystal has a varying pitch size at different spatial positions along the pump optical paths and provides phase matching of the pump beam and a corresponding wavelength of the seed beam.

61. The wavelength-controllable light source of clause 60, wherein pitch size range is between 6 and 12 micrometers.

62. The wavelength-controllable light source of clause 60, wherein the pump beam and the seed beam are frequency doubled to reduce a wavelength of the amplified seed beam.

63. The wavelength-controllable light source of clause 53, further comprising a symmetric mirror and a symmetric dispersive element that mirror the dichroic mirror and the dispersive element to cause the amplified seed beam for different selected pump optical paths to be on a same output optical path.

64. A semiconductor device manufacturing method comprising:

receiving a substrate with a photoresist layer;
directing light from a wavelength-controllable light source to transfer a pattern from a mask onto the photoresist layer, the wavelength-controllable light source comprising:

one or more light sources configured to provide light pulses;
a first optical path for a high energy pulse from the one or more light sources;
a second optical path for a low energy pulse from the one or more light sources;
a supercontinuum generator on the second optical path, the supercontinuum generator configured to spectrally broaden the low energy pulse into a supercontinuum;
a tunable filter on the second optical path, the tunable filter configured to generate a seed pulse by passing the supercontinuum that is within an amplification band; and
a nonlinear amplifier configured to receive the seed pulse and the high energy pulse and generate an amplified light pulse by amplifying the seed pulse with a portion of the high energy pulse; and

removing a portion of the photoresist layer to form the pattern over the substrate.

65. A computer program product comprising a non-transitory, machine-readable medium storing instructions which, when executed by at least one programmable processor, cause operations comprising:

controlling a lithography system to direct radiation from a wavelength-controllable light source to transfer a pattern from a mask onto a substrate with a photoresist layer, the wavelength-controllable light source comprising:

one or more light sources configured to provide light pulses;
a first optical path for a high energy pulse from the one or more light sources;
a second optical path for a low energy pulse from the one or more light sources;
a supercontinuum generator on the second optical path, the supercontinuum generator configured to spectrally broaden the low energy pulse into a supercontinuum;
a tunable filter on the second optical path, the tunable filter configured to generate a seed pulse by passing the supercontinuum that is within an amplification band; and
a nonlinear amplifier configured to receive the seed pulse and the high energy pulse and generate an amplified light pulse by amplifying the seed pulse with a portion of the high energy pulse; and

controlling the lithography system to remove a portion of the photoresist layer to form the pattern over the substrate.

66. A semiconductor device manufacturing method comprising:

receiving a substrate with a photoresist layer;

directing light from a light source to transfer a pattern from a mask onto the photoresist layer by at least directing the light through a wavelength separation system comprising:

an input for receiving light comprising at least three separated wavelength bands;
an output for outputting light of one wavelength band of the at least three separated wavelength bands; and
a plurality of combinations to receive light from one or more of the at least three separated wavelength bands, the plurality of combinations comprising:

one or more Pockels cells; and
a polarizing beam splitter;

wherein, for the respective combinations, the one or more Pockels cells are configured to control polarization of received light, wherein, for the respective combinations, the polarizing beam splitter receives light from the one or more Pockels cells and is arranged to let through light of a first polarization and to redirect light of a second polarization,
wherein, the plurality of combinations are arranged to send the light of one wavelength band to the output; and

removing a portion of the photoresist layer to form the pattern over the substrate .

67. A computer program product comprising a non-transitory, machine-readable medium storing instructions which, when executed by at least one programmable processor, cause operations comprising:

controlling a lithography system to direct light from a light source to transfer a pattern from a mask onto a substrate with a photoresist layer, the light source comprising a wavelength separation system comprising:

an input for receiving light comprising at least three separated wavelength bands;
an output for outputting light of one wavelength band of the at least three separated wavelength bands; and
a plurality of combinations to receive light from one or more of the at least three separated wavelength bands, the plurality of combinations comprising:

one or more Pockels cells; and
a polarizing beam splitter;

wherein, for the respective combinations, the one or more Pockels cells are configured to control polarization of received light, wherein, for the respective combinations, the polarizing beam splitter receives light from the one or more Pockels cells and is arranged to let through light of a first polarization and to redirect light of a second polarization, wherein, the plurality of combinations are arranged to send the light of one wavelength band to the output; and

controlling the lithography system to remove a portion of the photoresist layer to form the pattern over the substrate.

68. A semiconductor device manufacturing method comprising:

receiving a substrate with a photoresist layer; directing light from a light source to transfer a pattern from a mask onto the photoresist layer, the light directed through a system comprising:

an adjustable color filter configured to receive multi-wavelength light and to selectively pass seed light in an amplification band; a diffractive element configured to disperse the seed light from the adjustable color filter into different optical paths based on the amplification band; a mirror configured to direct the seed light from the diffractive element and to focus the seed light to a focal point; and a nonlinear amplifier configured to receive pump light and configured to receive the seed light at the focal point from different angles based on the different optical paths, wherein the different optical paths result in phase matching with the pump light in the nonlinear amplifier causing amplification of the seed light; and

removing a portion of the photoresist layer to form the pattern over the substrate.

69. A computer program product comprising a non-transitory, machine-readable medium storing instructions which, when executed by at least one programmable processor, cause operations comprising:

controlling a lithography system to direct light from a light source to transfer a pattern from a mask onto a substrate with a photoresist layer, the light directed through a system comprising:

an adjustable color filter configured to receive multi-wavelength light and to selectively pass seed light in an amplification band; a diffractive element configured to disperse the seed light from the adjustable color filter into different optical paths based on the amplification band; a mirror configured to direct the seed light from the diffractive element and to focus the seed light to a focal point; and a nonlinear amplifier configured to receive pump light and configured to receive the seed light at the focal point from different angles based on the different optical paths, wherein the different optical paths result in phase matching with the pump light in the nonlinear amplifier causing amplification of the seed light; and

removing a portion of the photoresist layer to form the pattern over the substrate.

70. A semiconductor device manufacturing method comprising:

receiving a substrate with a photoresist layer; directing light from a wavelength-controllable light source to transfer a pattern from a mask onto the photoresist layer, the wavelength-controllable light source comprising:

a light deflector configured to selectively direct a pump beam into one of a plurality of pump optical paths; a dispersive element configured to disperse a seed beam into a plurality of seed optical paths; a dichroic mirror where a selected pump optical path passes through to intersect and become collinear with one of the seed optical paths that are reflected off the dichroic mirror; and a nonlinear amplifier configured to generate an amplified seed beam using the pump beam, wherein amplification of the seed beam is based on a location where the selected pump optical path reaches the nonlinear amplifier; and

removing a portion of the photoresist layer to form the pattern over the substrate.

71. A computer program product comprising a non-transitory, machine-readable medium storing instructions which, when executed by at least one programmable processor, cause operations comprising:

controlling a lithography system to direct radiation from a wavelength-controllable light source to transfer a pattern from a mask onto a substrate with a photoresist layer, the wavelength-controllable light source comprising:

a light deflector configured to selectively direct a pump beam into one of a plurality of pump optical paths;
a dispersive element configured to disperse a seed beam into a plurality of seed optical paths;
a dichroic mirror where a selected pump optical path passes through to intersect and become collinear with one of the seed optical paths that are reflected off the dichroic mirror; and
a nonlinear amplifier configured to generate an amplified seed beam using the pump beam, wherein amplification of the seed beam is based on a location where the selected pump optical path reaches the nonlinear amplifier; and

controlling the lithography system to remove a portion of the photoresist layer to form the pattern over the substrate.

72. A metrology apparatus comprising a wavelength-controllable light source according to clause 1, a wavelength separation system according to clause 35, a system according to clause 41, or a wavelength-controllable light source according to clause 53.

73. An inspection system comprising a wavelength-controllable light source according to clause 1, a wavelength separation system according to clause 35, a system according to clause 41, or a wavelength-controllable light source according to clause 53.

74. A lithographic system comprising a wavelength-controllable light source according to clause 1, a wavelength separation system according to clause 35, a system according to clause 41, or a wavelength-controllable light source according to clause 53.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A wavelength-controllable light source comprising:

one or more light sources configured to provide light pulses;
a first optical path for a high energy pulse from the one or more light sources;
a second optical path for a low energy pulse from the one or more light sources;
a supercontinuum generator on the second optical path, the supercontinuum generator configured to spectrally broaden the low energy pulse into a supercontinuum;
a tunable filter on the second optical path, the tunable filter configured to generate a seed pulse by passing the supercontinuum that is within an amplification band; and
a nonlinear amplifier configured to receive the seed pulse and the high energy pulse and generate an amplified light pulse by amplifying the seed pulse with a portion of the high energy pulse.

2. The wavelength-controllable light source of claim 1, the one or more light sources comprising a laser, and the wavelength-controllable light source further comprising a splitter configured to split the light pulses into the high energy pulse and the low energy pulse.

3. The wavelength-controllable light source of claim 2, the splitter comprising one or more of an intensity-based splitter, a polarization splitter, a wavefront splitter, or a diffractive splitter.

4. The wavelength-controllable light source of claim 1, the one or more light sources comprising:

   a first light source configured to generate the high energy pulse; and
   a second light source configured to generate the low energy pulse.

5. The wavelength-controllable light source of claim 1, wherein the one or more light sources are configured to generate the light pulses to have a duration between 10 fs and 100 nanoseconds.

6. The wavelength-controllable light source of claim 1, wherein the one or more light sources are configured to generate the light pulses to have a duration between 1 and 1000 picoseconds.

7. The wavelength-controllable light source of claim 1, wherein an energy ratio of the high energy pulse to the low energy pulse is at least 4.

8. The wavelength-controllable light source of claim 7, wherein an energy ratio of the high energy pulse to the low energy pulse is at least 99.

9. The wavelength-controllable light source of claim 1, the supercontinuum generator comprising a photonic crystal fiber that receives the low energy pulse and spectrally broaden wavelengths of the low energy pulse into the supercontinuum.

10. The wavelength-controllable light source of claim 9, wherein the photonic crystal fiber is a solid-core photonic crystal fiber.

11. The wavelength-controllable light source of claim 10, the solid-core photonic crystal fiber comprising a rare earth dopant in a core of the solid-core photonic crystal fiber.

12. The wavelength-controllable light source of claim 9, wherein the photonic crystal fiber is a hollow-core photonic crystal fiber comprising a fluid working medium.

13. The wavelength-controllable light source of claim 12, the fluid working medium comprising a molecular gas or a noble gas.

14. The wavelength-controllable light source of claim 1, wherein the low energy pulse spectrally broadened into the supercontinuum includes light with a wavelength in a range of 100 nm to 10000 nm.

15. A metrology apparatus comprising a wavelength-controllable light source according to claim 1.

Fig. 1

...

Fig. 2

Fig. 3

Fig. 4

Fig. 5A

Fig. 5B

Fig. 5C

Fig. 6

Fig. 7

Fig. 8

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 20040015085 A1
- WO 02017032454A1 A
- WO 2017032454 A1
- WO 2018127266 A1
- US 9160137 B1